# EUROPÄISCHE PATENTSCHRIFT

(11) **EP 1 195 945 B1**
(45) Veröffentlichungstag und Bekanntmachung des Hinweises auf die Patenterteilung: **08.12.2004**
(21) Anmeldenummer: 01440319.0
(22) Anmeldetag: 01.10.2001
(51) Int. Cl.: H04L 12/24, H04L 29/06, H04L 29/12

(54) **Client, System und Verfahren zum Netzmanagement in einem Multiserver-Kommunikationsnetz**
Client, system, and method for network management in a multi-server communication network
Client, système et procédé pour la gestion d'un réseau multi-serveur de communication

(30) Priorität: 05.10.2000 DE 10049610
(43) Veröffentlichungstag der Anmeldung: 10.04.2002
(73) Patentinhaber: ALCATEL, 75008 Paris (FR)
(72) Erfinder: Tilmanns, Heinz, 14532 Stahnsdorf (DE)
(74) Vertreter: Rausch, Gabriele, Dr.

(56) Entgegenhaltungen:
- WO-A-98/33307
- WO-A-99/15950
- DE-A- 19 752 614
- US-A- 5 696 486
- HAJELA S: "HP OEMF: ALARM MANAGEMENT IN TELECOMMUNICATION NETWORKS" HEWLETT-PACKARD JOURNAL, HEWLETT-PACKARD CO. PALO ALTO, US, Bd. 47, Nr. 5, 1. Oktober 1996 (1996-10-01), Seiten 22-30, XP000631663

## Beschreibung

Die Erfindung betrifft einen Netzwerkmanagement-Client zum Verwalten und Überwachen eines Kommunikationsnetzes durch einen Betreiber, ein Netzwerkmanagement-System zum Verwalten und Überwachen eines Kommunikationsnetzes durch einen oder mehrere Betreiber, und ein Verfahren zur Unterstützung der Verwaltung und Überwachung eines Kommunikationsnetzes durch einen Betreiber des Kommunikationsnetzes.

Die Erfindung geht von folgendem bekannten Lösungsansatz zur Durchführung von Netzwerkmanagement-Funktionen in einem Fernsprechnetz aus:

Das Netzwerkmanagement-System besteht aus einer Vielzahl von Netzwerkmanagement-Servern und Netzwerkmanagement-Clients. Die Netzwerkmanagement-Server sind jeweils einem Netzwerkmanagementbereich zugeordnet und mit den Vermittlungsstellen dieses Netzwerkmanagementbereiches verbunden . Sie führen Netzwerkmanagement-Funktionen für die Vermittlungsstellen des Netzwerkmanagementbereichs aus und steuern so diese Vermittlungsstellen. In Bezug auf die Ausführung von Netzwerkmanagement-Funktionen kommunizieren die Vermittlungsstellen eines Netzwerkmanagementbereiches ausschließlich mit dem diesem Netzwerkmanagementbereich zugeordneten Netzwerkmanagement-Server. Mittels der Netzwerkmanagement-Clients steuert und überwacht das Personal der Betreiber des Fernsprechnetzes das Fernsprechnetz. Jedem Netzwerkmanagement-Server ist mindestens ein diesem Netzwerkmanagement-Server exklusiv zugeordneter Netzwerkmanagement-Client vorhanden, mittels dem ein Betreiber den Netzwerkmanagementbereich überwacht und steuert. Hierzu greift der Netzwerkmanagement-Client auf den ihm zugeordneten Netzwerkmanagement-Server zu, d. h., die Client-Applikationen des Netzwerkmanagement-Clients greifen auf fest zugeordnete Server-Applikationen des zugeordneten Netzwerkmanagement-Servers zu. Es besteht hierbei auch die Möglichkeit, daß ein Betreiber über spezielle Steuerbefehle das Zuordnen eines Netzwerkmanagement-Clients zu einem anderen Netzwerkmanagementbereich und somit das Zuordnen zu einem anderen Netzwerkmanagement-Server veranlaßt.

Dokumente, die mit TMN-Prinzipien (Telecommunications Management Network) zu tun haben, sind bekannt. Zum Beispiel, Offenlegungsschrift DE 197 52 614 A 1 beschreibt ein Verfahren und Kommunikationssystem zur Behandlung von Alarmen durch ein mehrere Managementebenen aufweisendes Managementnetz. Genauso, in Artikel "HP OEMF: Alarm Management in Telecommunications Networks", October 1996, Hewlett-Packard Journal, ist ein "HP Openview Element Management Framework" beschrieben.

Der Erfindung liegt nun die Aufgabe zugrunde, die Verwaltung und Überwachung eines Kommunikationsnetzes durch ein Netzwerkmanagementsystem zu verbessern.

Diese Aufgabe wird gelöst durch einen Netzwerkmanagement-Client nach der Lehre von Anspruch 1, durch ein Netzwerkmanagement-System zum Verwalten und Überwachen eines Kommunikationsnetzes nach der Lehre von Anspruch 8 und ein Verfahren zur Unterstützung der Verwaltung und Überwachung eines Kommunikationsnetzes nach der Lehre von Anspruch 10.

Der Erfindung liegt hierbei der Gedanke zugrunde, die übliche 1:1 Beziehung zwischen Client-Applikation und zugeordneter Server-Applikation aufzubrechen und durch eine sich dynamisch verändernde 1:n Beziehung zwischen Client-Applikation und Server-Applikationen verschiedener Netzwerkmanagement-Server zu ersetzen. Die Ausprägung dieses "Multi-Server-Zugriffs" ist hierbei nicht rechner- sondern applikationsspezifisch. Der "Multi-Server-Zugriff" kann von jeder Client-Applikation individuell genutzt werden, ohne die übrigen Applikationen zu beeinflußen. Hierzu werden von einem Netzwerkmanagement-Client für eine Client-Applikation diejenigen zwei oder mehr Server-Applikationen verschiedener Netzwerkmanagement-Server ermittelt, die der Client-Applikation zuordenbar sind. Aus dieser Menge von zuordenbaren Server-Applikationen wählt der Netzwerkmanagement-Client sodann dynamisch ein oder mehrere Server-Applikationen aus und initiiert eine Interaktion zwischen der Client-Applikation und der oder den ausgewählten Server-Applikationen.

Der Vorteil für den Nutzer einer Client-Applikation besteht darin, daß die Auswahl und die Verbindung mit notwendigen Servern transparent und automatisch erfolgt. Es bleibt für die Client-Applikation transparent, ob sie mit einem oder mit mehreren Server-Applikationen verbunden ist:

Die Kommunikationsverbindungen zwischen Client-Applikationen und Server-Applikationen werden bei Bedarf automatisch auf- und wieder abgebaut. Eine manuelle Auswahl eines Netzwerkmanagement-Servers durch den Betreiber ist nicht erforderlich.

In der Anzeige der Client-Applikation existiert keine Trennung nach Netzwerkmanagement-Servern, die empfangenen Daten der Server-Applikationen werden in einheitlichen Listen, Tabellen usw. so dargestellt, daß verborgen bleibt, welcher Netzwerkmanagement-Server sie jeweils geliefert hat.

Ein weiterer Vorteil besteht darin, daß Kommunikationsverbindungen zwischen Netzwerkmanagement-Clients und Servern nur bei Bedarf aufgebaut werden und keine ungenutzten Verbindungen aufrechterhalten werden.

Vorteilhafte Ausgestaltungen der Erfindung sind den Unteransprüchen zu entnehmen.

Im Folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationsnetzes mit einem erfindungsgemäßen Netzwerkmanagementsystem.
- Fig. 2: zeigt eine funktionelle Darstellung eines Ausschnittes des Netzwerkmanagementsystems nach Fig. 1.

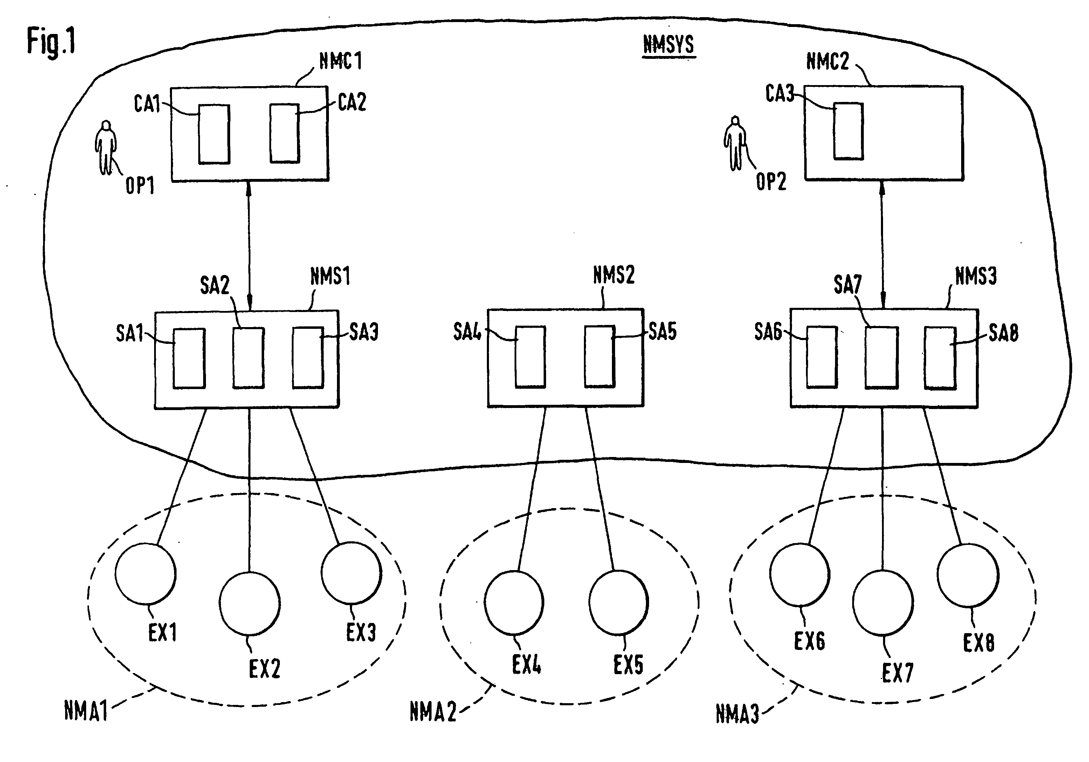

Fig. 1 zeigt mehrere Netzelemente EX1 bis EX8 eines Kommunikationsnetzes sowie ein Netzwerkmanagement-System NMSYS zum Verwalten und Überwachen des Kommunikationsnetzes durch Betreiber OP1 und OP2. Das Netzwerkmanagement-System NMSYS weist mehrere Netzwerkmonagement-Server NMS 1 bis NMS3 und mehrere Netzwerkmanagement-ClientsNMC1 und NMC2 auf. Die Netzelemente EX1 bis EX3 sind einem Netzwerkmanagementbereich NMA1, die Netzelemente EX4 und EX5 sind einem Netzwerkmanagementbereich NMA2, und die Netzelemente EX6 bis EX8 sind einem Netzwerkmanagementbereich NMA3 zugeordnet. Die Anzahl der Netzelemente pro Netzwerkmanagementbereich sowie die Anzahl der Netzwerkmanagement-Server und Netzwerkmanagement-Clients ist beispielhaft gewählt.

Die Netzelemente EX1 bis EX8 werden jeweils von einer Vermittlungsstelle gebildet. Es ist jedoch auch möglich, daß es sich bei den Netzelementen EX1 bis EX8 um andersartige Netzelemente, beispielsweise um Router, Brigdes, Cross-Connects oder um eine Mischung verschiedenartiger Netzelemente handelt. Die Zuordnung von Netzelementen zu den Netzwerkmanagementbereichen NMA1 bis NMA3 erfolgt vorteilhafterweise nach räumlichen Kriterien.

Die Netzwerkmanagement-Server NMS1 bis NMS3 und die Netzwerkmanagement-Clients NMC1 und NMC2 werden jeweils von einem Rechner oder mehreren miteinander verbundenen Rechnern gebildet, auf denen eine Softwareplattform, beispielsweise bestehend aus einem Betriebssystem und einem Datenbanksystem, und ein oder mehrere Applikations-Programme aufsetzen, die die Funktion der Netzwerkmanagement-Server NMS1 bis NMS3 und der Netzwerkmanagement-Clients NMC1 und NMC2 steuern.

Die Netzwerkmanagement-Clients NMC1 und NMC2 ermöglichen den Betreibern OP1 bzw. OP2 mittels Zugriff auf einen oder auf mehrere der Netzwerkmanagement-Server NMS1 bis NMS3 die Überwachung und Verwaltung des Kommunikationsnetzes. Hierzu verfügen die Netzwerkmanagement-Clients NMC1 und NMC2 jeweils über mehrere Client-Applikationen, von denen in Fig. 1 beispielhaft zwei Client-Applikationen CA1 und CA2 für den Netzwerkmanagement-Client NMC1 und eine Client-Applikationen CA3 für den Netzwerkmanagement-Client NMC2 gezeigt sind.

Die Client-Applikationen CA1 bis CA3 stellen den Betreibern OP1 bzw. OP2 jeweils eine spezielle Funktion zur Durchführung der Überwachung und/oder Kontrolle des Kommunikationsnetzes durch den jeweiligen Betreiber OP1 bzw. OP2. bereit. Die Client-Applikationen CA1 und CA3 stellen beispielsweise als Funktion das Nr. 7 Management bereit und die Client-Applikation CA2 stellt als Funktion das Anzeigen von Fehlern und Meldungen bereit. Beispiele für weitere Funktion zur Durchführung der Überwachung oder Kontrolle des Kommunikationsnetzes durch den jeweiligen Betreiber sind: Bearbeitung von Gerätefehlern und Verbindungsstörungen, Bearbeitung der Bestückungs- und Einstellungsdaten von Netzelementen sowie deren Zusammenschaltung im Netz, Bearbeitung der für die Gebührenabrechnung relevanten Parameter, Bearbeitung der Qualitätsdaten, sicherungs- und sicherheitstechnische Bearbeitung.

Die Client-Applikationen CA1 bis CA3 werden jeweils von ein oder mehreren Applikationsprogrammen gebildet, die auf der Softwareplattform der Netzwerkmanagement-Clients NMC1 und NMC2 ablaufen. Client-Applikationen und damit die diesen zugeordneten Applikationsprogramme werden von den Netzbetreibern OP1 und OP2 auf den Netzwerkmanagement Clients NMC1 bzw. NMC2 gestartet, wenn von ihnen die spezielle, von der jeweiligen Client-Applikation erbrachte Funktion benötigt wird. Es ist hierbei auch möglich, daß der Zugang zu den einzelnen Client-Applikationen CA1 bis CA3 jeweils individuell beschränkt ist und sich der Netzbetreiber OP1 und OP2 beim Zugriff oder beim Start der Client-Applikationen CA1 bis CA3 zur Überprüfung der Autorisierung identifizieren muß.

Den Netzwerkmanagement-Servern NMS1 bis NMS3 ist jeweils ein Netzwerkmanagementbereich NMA1, NMA2, bzw. NMA3 mit einem Satz von zugeordneten Netzelementen EX1 bis EX3, EX4 und EXS, bzw. EX6 bis EX8 zugeordnet. Die Netzwerkmanagement-Server NMS1 bis NMS3 kommunizieren mit den Netzwerkelementen ihres Netzwerkmanagementbereiches mittels eines Netzwerkmanagementprotokoll, beispielsweise mittels des CMIP oder SNMP Protokolls (CMIP = ,Common Management Information Protocol, SNMP = Simple Network Management Protocol). Mittels dieser Kommunikation senden sie Steuernachrichten an diese Netzelemente und empfangen Status- und Fehlernachrichten von diesen Netzelementen.

Das Senden von Steuernachrichten an die Netzelemente des jeweiligen Netzwerkmanagementbereiches und das Empfangen und Verarbeiten von Status- und Fehlernachrichten von diesen Netzelementen wird innerhalb der Netzwerkmanagement-Server NMS1 bis NMS3 jeweils von Server-Applikationen gesteuert, von denen in Fig. 1 beispielhaft drei Server-Applikationen SA1 bis SA3 des Netzwerkmanagement-Servers NMS1, zwei Server-Applikationen SA4 und SA5 des Netzwerkmanagement-Servers NMS2, und drei Server-Applikationen SA6 bis SA8 des Netzwerkmanagement-Servers NMS3 gezeigt sind. Die Server-Applikationen SA1 bis SA8 bieten Client-Applikationen von Netzwerkmanagement-Clients die Ausführung von Netzwerkmanagement-Diensten in Bezug auf die Netzelementes ihres jeweiligen Netzwerkmanagementbereiches an. Mittels Zugriff auf diese Dienste erbringen die Client-Applikationen CA1 bis CA2 ihre jeweilige Funktion gegenüber den Netzbetreibern OP1 bzw. OP2. Client-Applikationen der Netzwerkmanagement-Clients NMC1 und NMC2 interagieren somit im Rahmen von jeweiligen Client-Server-Beziehungen mit Server-Applikationen der Netzwerkmanagement-Server NMS1 bis NMS3. Die Server-Applikationen SA1 bis SA8 werden hierbei jeweils von ein oder mehreren Applikationsprogrammen gebildet, die auf der Softwareplattform der Netzwerkmanagement-Server NMS1 bis NMS3 ablaufen.

Die Netzwerkmanagement-Clients NMC1 und NMC2 ermöglichen dem Betreiber OP1 bzw. OP2 somit mittels Zugriff auf einen oder auf mehrere der Netzwerkmanagement-Server NMS1 bis NMS3 die Überwachung und Verwaltung des Kommunikationsnetzes. Hierbei greifen die Client-Applikationen der Netzwerkmanagement-Clients zur Durchführung ihrer speziellen Funktion zur Überwachung oder Kontrolle des Kommunikationsnetzes durch den Betreiber auf mindestens eine Server-Applikation eines der Netzwerkmanagement-Server NMS1 bis NMS3 zu. Die Netzwerkmanagement-Clients NMC 1 und NMC2 ermitteln für ihre Client-Applikationen jeweils zwei oder mehr Server-Applikationen verschiedener Netzwerkmanagement-Server, die der Client-Applikation zuordenbar sind. Danach wählen die Netzwerkmanagement-Clients NMC1 und NMC2 dynamisch aus den einer Client-Applikation zuordenbaren Server-Applikationen jeweils ein oder mehrere Server-Applikationen aus und initiieren eine Interaktion zwischen der Client-Applikation und der oder den ausgewählten Server-Applikationen.

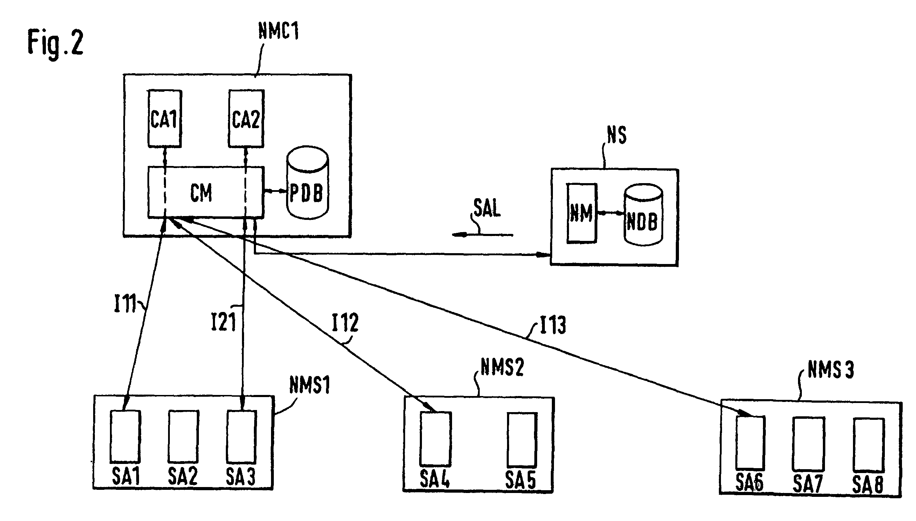

Die detaillierte Funktionsweise der Netzwerkmanagement-Clients NMC1 und NMC1 wird anhand von Fig. 2 beispielhaft anhand der Funktionsweise des Netzwerkmanagement-Clients NMC 1 erläutert.

Fig. 2 zeigt den Netzwerkmanagement-Client NMC1 mit den Client-Applikationen CA1 und CA2, die Netzwerkmanagement-Server NMS1 bis NMS3 mit den Server-Applikationen SA1 bis SA8 und einen Server NS.

Der Server NS stellt einen für mehrere Netzwerkmanagement-Clients zentralen Benennungs-Server dar, der diesen Netzwerkmanagement-Clients Informationen über die im Kommunikationsnetznetz verfügbaren Server-Applikationen zur Verfügung stellt. Es ist auch möglich, auf den Server NS zu verzichten.

Der Server NS wird von einem oder von mehreren miteinander verbundenen Rechnern gebildet, auf denen eine Software-Plattform, Applikationsprogramme und Daten aufsetzen, die die im Folgenden beschriebenen Funktionen des Servers NS erbringen. Es ist jedoch auch möglich, daß der Server NS ein virtueller Server ist und nur von diesen Applikationsprogrammen und Daten gebildet wird. Diese Applikationsprogramme können dann beispielsweise auf der Systemplattform eines der Netzwerkmanagement-Clients oder Netzwerkmanagement-Server des Netzwerkmanagementsystems NMSYS ablaufen.

Aus funktioneller Sicht weist der Server NS eine Funktionseinheit NM und eine Datenbank NDB auf. In der Datenbank NDB sind die Kennungen und/oder Namen der aktiven Server-Applikationen des Netzwerkmanagementsystems NMSYS sowie eine zugeordnete Adresse abgespeichert, über die die jeweilige Server-Applikation kontaktiert werden kann. Es ist weiter möglich, daß einer Server-Applikation noch zusätzlich Parameter zugeordnet sind, die noch weitere Informationen über die Eigenschaften der jeweiligen Server-Applikation beinhalten. Es ist auch möglich, daß neben den aktiven auch alle inaktiven Server-Applikationen des Netzwerkmanagementsystems NMSYS in der Datenbank NDB aufgeführt sind. Die Funktionseinheit NM ermöglicht Netzwerkmanagement-Clients des Netzwerkmanagementsystems NMSYS den Zugriff auf die Daten der Datenbank NDB.

Der Netzwerkmanagement-Client NMC1 weist aus funktioneller Sicht neben den Client-Applikationen CA1 und CA2 eine Funktionseinheit CM und eine Datenbank PDB auf.

In der Datenbank PDB sind Zuordnungen abgespeichert, die jeder der Client-Applikationen CA1 und CA2 jeweils zwei oder mehrere der jeweiligen Client-Applikation zuordenbare Server-Applikationen verschiedener Netzwerkmanagement-Server zuordnen. Die Datenbank PDB speichert somit beispielsweise für jede der Client-Applikationen CA1 und CA2 ein Profil mit einer Liste ab, in der die Kennungen der zuordenbaren Server-Applikationen abgespeichert sind. Diese Kennung besteht beispielsweise aus einem Namen, einem Objektnamen, einer Netzadresse oder einer Objektadresse dieser Server-Applikation. Weiter ist es vorteilhaft, daß das Profil jeder der Kennungen noch ein oder mehrere Parameter zuordnet, die weitere Informationen über die jeweilige Server-Applikation enthalten.

Die Funktionseinheit CM wird von einem oder von mehreren Applikationsprogrammen gebildet, die auf der Softwareplattform des Netzwerkmanagement-Clients NMC1 ablaufen und die bei ihrer Abarbeitung die im Folgenden beschriebenen Funktionen ausführen:

Die Funktionseinheit CM ermöglicht eine transparente Kommunikation zwischen den Client-Applikationen CA1 und CA2 und den Server-Applikationen der Netzwerkmanagement-Server des Netzwerkmanagementsystems NMSYS. Hierzu stellt die Funktionseinheit CM den Client-Applikationen CA1 und CA2 einen Dienst zur Verfügung, mittels dem diese mit geeigneten Server-Applikationen kommunizieren. Die Funktionseinheit CM erbringt somit die Rolle eines "Kommunikations-Managers" für die Kommunikation der Client-Applikationen des Netzwerkmanagement-Clients NMC1 mit Server-Applikationen der Netzwerkmanagement-Server des Netzwerkmanagementsystems NMSYS. Die Client-Applikationen spezifizieren hierbei die Eigenschaften einer Server-Applikation gegenüber der Funktionseinheit CM, von der sie einen Dienst in Anspruch nehmen möchten, beispielsweise indem sie einen spezifischen Netzwerkmanagement-Dienst mit spezifischen Parametern anfordert. Die Funktionseinheit CM identifiziert eine oder mehrere geeignete Server-Applikationen und initiiert - transparent für die Client-Applikation - die Interaktion zwischen der Client-Applikation und diesen Server-Applikationen.

Die Funktionseinheit CM ermittelt zunächst für die Client-Applikationen CA1 und CA2 zwei oder mehr der jeweiligen Client-Applikation zuordenbare Server-Applikationen verschiedener Netzwerkmanagement-Server. Diese Ermittlung erfolgt vorzugsweise zu dem Zeitpunkt, bei dem die jeweilige Client-Applikation gestartet wird. Es ist jedoch auch möglich, daß diese Ermittlung bei der Initialisierung des Netzwerkmanagement Clients NMC1 oder beim ersten Anfordern einer Interaktion mit einer Server-Applikation durch die Client-Applikation erfolgt.

Die einer Client-Applikation zuordenbaren Server-Applikationen stellen vorzugsweise diejenigen Server-Applikationen dar, die mindestens einen für die Client-Applikation verwendbaren Netzwerkmanagement-Dienst anbieten. Es ist hierbei auch möglich, daß die Gruppe der einer Client-Applikation zuordenbaren Server-Applikationen enger oder weiter gefaßt ist. Sie kann beispielsweise nur diejenigen Server-Applikationen umfassen, die alle von der Client-Applikation benötigten Netzwerkmanagement-Dienste anbietet, aber auch diejenigen Server-Applikationen umfaßt, die einen für die Client-Applikation verwendbaren Dienst nur unter ganz speziellen Bedingungen anbieten. Die einer Client-Applikation zuordenbaren Server-Applikationen können auch diejenigen Server-Applikationen sein, die mindestens einen für die Client-Applikation bestimmte Funktion erfüllen können. Vorteilhafterweise umfassen die zuordenbaren Server-Applikationen Server-Applikationen verschiedener Netzwerkmanagement-Server, möglichst aller Netzwerkmanagement-Server des Netzwerkmanagementsystems NMSYS. Dadurch wird es der Client-Applikation ermöglicht, Netzwerkmanagement-Funktion für den gesamten Bereich des Netzwerkmanagementsystems NMSYS zu erbringen.

Es ist möglich, daß die Funktionseinheit CM die einer Client-Applikation zuordenbaren Server-Applikationen mittels Zugriff auf eine Liste von den Server-Applikationen des Netzwerkmanagementsystems angebotenen Netzwerkmanagement-Diensten ermittelt. Solch eine Liste kann lokal gehalten werden, auch ein Zugriff auf diese Liste über den zentralen Server NS ist sinnvoll: In der Datenbank NDB ist beispielsweise angeführt, welche Netzwerkmanagement-Dienste die Server-Applikationen des Netzwerkmanagementsystems anbieten und mittels dieser Daten werden sodann zuordenbarer Server-Applikationen ermittelt.

Es ist auch möglich, daß die Client-Applikationen und Server-Applikationen des Netzwerkmanagementsystems je nach den von ihnen erbrachten Funktionen verschiedenen Gruppen von Client- bzw. Server-Applikationen zugeordnet sind. Die Zugehörigkeit zu solch einer Gruppe kann sich beispielsweise auch im Namen der Client-Applikationen und/oder Server-Applikationen wiederspiegeln. Alle Applikationen einer solchen Gruppe können beispielsweise denselben Namen haben. Einer Gruppe von Client-Applikationen kann aus funktioneller Sicht eine oder mehrere Gruppen von Server-Applikationen zugeordnet sein. Beispielsweise kann einer Gruppe von Client-Applikationen diejenige Gruppe von Server-Applikationen zugeordnet sein, die Dienste für diese anbietet. Diese Zuordnung - Gruppe Client-Applikationen zu Gruppe Server-Applikationen - kann in dem Netzwerkmanagement-Client NMC1 oder in dem Server NS abgespeichert sein.

In einem ersten Schritt werden für die Ermittlung der der Client-Applikation CA1 zuordenbaren Server-Applikationen diejenige Gruppe von Client-Applikationen bestimmt, der die Client-Applikation CA1 zugeordnet ist. Sodann werden die Gruppe(n) von Server-Applikationen mittels der Zuordnung bestimmt, die der bestimmten Gruppe von Client-Applikationen zugeordnet sind. Dann werden diejenigen Server-Applikationen des Netzwerkmanagementsystems NMSYS ermittelt, die der bestimmten Gruppe(n) von Server-Applikationen zugeordnet sind. Dies wird vorteilhafterweise mittels Zugriff auf den Server NS realisiert:

An den Server NS wird eine Anfrage mit einer Kennzeichnung der bestimmten Gruppe(n) von Server-Applikationen gesendet. Diese kann beispielsweise aus dem Namen von ein oder mehreren Server-Applikationen bestehen (alle Server-Applikationen einer Gruppe von Server-Applikationen haben denselben Namen). Die Funktionseinheit NM ermittelt mittels Zugriff auf die Datenbank NDB die zugeordneten Server-Applikationen des Netzwerkmanagementsystems NMSYS. Sodann wird eine Liste SAL mit den Adressen, möglicherweise auch zusätzlich den Kennungen der ermittelten Server-Applikationen in den Netzwerkmanagement-Client NMC 1 heruntergeladen und der Client-Applikation in der Datenbank PDB zugeordnet.

In einem zweiten Schritt werden die für die Client-Applikation ermittelten Server-Applikationen nacheinander von der Funktionseinheit CM kontaktiert um zu ermitteln, unter welchen Bedingungen diese Server-Applikationen Dienste erbringt. Es ist auch möglich, daß die Funktionseinheit CM die für die Client-Applikation ermittelten Server-Applikationen kontaktiert um zu ermitteln welche dieser Server-Applikationen welche Dienste unter welchen Bedingungen erbringt. Hierbei ist es vorteilhaft, daß diese Ermittlung auf die speziellen Bedürfnisse der Client-Applikation zugeschnitten ist und somit nur für die Auswahl einer Server-Applikation für diese spezielle Client-Applikation relevante Informationen ermittelt werden. Auf diese Weise werden beispielsweise diejenigen Server-Applikationen auf den verschiedenen Netzwerkmanagement-Servern des Netzwerkmanagementsystems bestimmt, die eine bestimmte Funktion oder einen bestimmten Dienst für die Client-Applikation erbringen können.

Mittels der Kontaktierung der ermittelten Server-Applikationen wird ein Profil der für die Client-Applikation ermittelten Server-Applikationen erstellt, das in der Datenbank NDB abgespeichert wird.

Es ist auch möglich, auf den zweiten Schritt zu verzichten. In diesem Fall ist es vorteilhaft, bei der Anforderung eines Dienstes einer Server-Applikation durch eine Client-Applikation die zugeordneten Server-Applikationen nacheinander wie oben dargestellt zu kontaktieren, bis ein oder mehrere Server-Applikationen identifiziert sind, die die aktuellen Bedürfnisse der anfordernden Client-Applikation erfüllen. Ein solches Verfahren kann in einer "trial and error" Prozedur bestehen, in der nacheinander durchgetestet wird, welche der Server-Applikationen den Bedürfnissen einer speziellen Anforderung der Client-Applikation am besten entspricht. Auch diese Ergebnisse können in einem Profil der Client-Applikation in der Datenbank NDB abgespeichert werden. Durch Wiederholung dieses Verfahrens, wenn die in dem Profil vorhandenen Informationen nicht ausreichend oder falsch sind, kann das Profil der Client-Applikation dynamisch aktualisiert werden.

Es ist auch möglich, auf diese Weise ein zentrales Profil für eine Gruppe von Client-Applikationen zu erstellen und in der Datenbank NDB abzuspeichern. Weiter ist es möglich, ein zentrales Profil für Server-Applikationen zu erstellen und bei Kontaktierung der ermittelten Server-Applikationen dynamisch zu aktualisieren.

Die Funktionseinheit CM wöhlt weiter aus den der Client-Applikation zuordenbaren Server-Applikationen dynamisch ein oder mehrere Server-Applikationen aus und initiiert eine Interaktion zwischen der Client-Applikation und der oder den ausgewählten Server-Applikationen. Jedes Mal, wenn eine Client-Applikation eine Anforderung an eine Server-Applikation richtet, wählt die Funktionseinheit CM dynamisch ein oder mehrere Server-Applikationen aus den zugeordneten Server-Applikationen aus, die ja in der Datenbank NDB abgespeichert sind. Sodann initiiert sie das Weiterleiten der Anforderung an die ausgewählte (n) Server-Applikation(en).

Die Funktionseinheit CM trifft die Auswahl dynamisch, d. h. es besteht keine feste Zuordnung von Client- und Server-Applikationen, diese Zuordnung wird immer wieder entsprechend den Umständen neu festgelegt und paßt sich somit automatisch an eine Veränderung der Umstände an. Die Funktionseinheit CM trifft die Auswahl weiter anhand von Daten über den Kontext und den Inhalt der Anforderung sowie anhand von Daten über die zugeordneten Server-Applikationen. Hierfür verwendet die Funktionseinheit CM vorteilhafterweise das in der Datenbank PDB abgespeicherte Profile der anfordernden Client-Applikation. Ist ein solches Profil nicht vorhanden oder enthält nicht die notwendigen Informationen, ist es auch möglich, daß die Funktionseinheit CM, wie oben bereits dargelegt, ein oder mehrere der zugeordneten Server-Applikationen kontaktiert. Hierbei ist es auch möglich, das Profil der Client-Applikation bei dieser Kontaktierung dynamisch zu aktualisieren. Auch ein Zugriff auf ein zentrales Server-Applikations-Profil zur Ermittlung dieser Daten ist möglich.

Mittels dieser Daten wird von der Funktionseinheit CM diejenige(n) Server-Applikation(en) ausgewählt, an die die Anforderung zu richten ist, um den mit der Anforderung verbunden Zweck zu erreichen. Zu beachtende Kriterien sind hierbei beispielsweise der angeforderte Netzwerkmanagementdienst, Zugriffsrechte der Client-Applikation auf die verschiedenen Server-Applikation und Netzwerkmanagement-Server, betroffene Netzelemente oder Gruppen von Netzelementen. Zur Erfüllung des Zweckes kann es u. U. notwendig sein, die Anforderung parallel an mehrere Server-Applikationen zu senden, beispielsweise wenn Netzelemente aus unterschiedlichen Netzwerkmanagementbereichen betroffen sind.

## Patentansprüche

1. Netzwerkmanagement-Client (NMC1, NMC2) zum Verwalten und Überwachen eines Kommunikationsnetzes durch einen Betreiber (OP1, OP2), wobei der Netzwerkmanagement-Client (NMC1, NMC2) so ausgestaltet ist, daß er dem Betreiber (OP1, OP2) mittels Zugriff auf einen oder auf mehrere Netzwerkmanagement-Server (NMS1 bis NMS3), denen jeweils ein Netzwerkmanagementbereich (NMA1 bis NMA3) mit einem Satz von zugeordneten Netzelementen (EX1 bis EX8) zugeordnet ist, die Überwachung und Verwaltung des Kommunikationsnetzes ermöglicht, und der Netzwerkmanagement-Client (NMC1, NMC2) mit mindestens einer Client-Applikation (CA1 bis CA3) versehen ist, die zur Durchführung einer Funktion zur Überwachung oder Kontrolle des Kommunikationsnetzes durch den Betreiber (OP1, OP2) auf eine Server-Applikation (SA1 bis SA8) eines der Netzwerkmanagement-Server zugreift, die Client-Applikationen (CA1 bis CA3) von Netzwerkmanagement-Clients die Ausführung von Netzwerkmanagement-Diensten in Bezug auf die Netzelemente des Netzwerkmanagementbereiches (NMA1 bis NMA3) anbietet, der ihrem Netzwerkmanagement-Server (NMS1 bis NMS3) zugeordnet ist, und der Netzwerkmanagement-Client (NMC1, NMC2) so ausgestaltet ist, daß er aus den der Client-Applikation zuordenbaren Server-Applikationen dynamisch ein oder mehrere Server-Applikationen auswählt und eine Interaktion zwischen der Client-Applikation und der oder den ausgewählten Server-Applikationen initiiert,
**dadurch gekennzeichnet,**
**daß** der Netzwerkmanagement-Client (NMC1, NMC2) weiter so ausgestaltet ist, daß er für die Client-Applikation (CA1 bis CA3) zwei oder mehr Server-Applikationen verschiedener Netzwerkmanagement-Server ermittelt, die der Client-Applikation zuordenbar sind, und daß er die für die Client-Applikation ermittelten Server-Applikationen kontaktiert, um zu ermitteln, unter welchen Bedingungen diese Server-Applikationen Dienste erbringen.

2. Netzwerkmanagement-Client (NMC1, NMC2) nach Anspruch 1, **dadurch gekennzeichnet, daß** der Netzwerkmanagement-Client (NMC1, NMC2) weiter so ausgestaltet ist, daß er zur Ermittlung der zwei oder mehr zuordenbaren Server-Applikationen diejenigen Server-Applikationen der Netzwerkmanagement-Server eines Netzwerkmanagementsystems ermittelt, die für die Client-Applikation (CA1, CA2) verwendbare Netzwerkmanagement-Dienste anbieten.

3. Netzwerkmanagement-Client (NMC1, NMC2) nach Anspruch 1, **dadurch gekennzeichnet, daß** der Netzwerkmanagement-Client (NMC1, NMC2) weiter so ausgestaltet ist, daß er zur Ermittlung der zwei oder mehr zuordenbaren Server-Applikationen auf einen für mehrere Netzwerkmanagement-Clients (NMC1, NMC2) zentralen Server (NS) zugreift.

4. Netzwerkmanagement-Client (NMC1, NMC2) nach Anspruch 3, **dadurch gekennzeichnet, daß** der Netzwerkmanagement-Client (NMC1, NMC2) weiter so ausgestaltet ist, daß er von dem zentralen Server eine Liste (SAL) mit den Adressen der ermittelten Server-Applikationen herunterlädt und der Client-Applikation (CA1, CA2) zuordnet.

5. Netzwerkmanagement-Client (NMC1, NMC2) nach Anspruch 1, **dadurch gekennzeichnet, daß** der Netzwerkmanagement-Client (NMC1, NMC2) weiter so ausgestaltet ist, daß er die für die Client-Applikation (CA1, CA2) ermittelten Server-Applikationen kontaktiert um zu ermitteln, welche dieser Server-Applikationen welche Dienste unter welchen Bedingungen erbringt.

6. Netzwerkmanagement-Client (NMC1, NMC2) nach Anspruch 1, **dadurch gekennzeichnet, daß** der Netzwerkmanagement-Client (NMC1, NMC2) weiter so ausgestaltet ist, daß er mittels der Kontaktierung der ermittelten Server-Applikationen ein Profil der für die Client-Applikation (CA1, CA2) ermittelten Server-Applikationen erstellt und dieses Profil für die dynamische Auswahl von ein oder mehrere Server-Applikationen verwendet.

7. Netzwerkmanagement-Client (NMC1, NMC2) nach Anspruch 1, **dadurch gekennzeichnet, daß** der Netzwerkmanagement-Client (NMC1, NMC2) weiter so ausgestaltet ist, daß er ein Profil der für die Client-Applikation ermittelten Server-Applikationen bei Kontaktierung der ermittelten Server-Applikationen dynamisch aktualisiert.

8. Netzwerkmanagement-System (NMSYS) zum Verwalten und Überwachen eines Kommunikationsnetzes durch einen oder mehrere Betreiber (OP1, OP2), mit zwei oder mehr Netzwerkmanagement-Servern (NMS1 bis NMS3), denen jeweils ein Netzwerkmanagementbereich (NMA1 bis NMA3) mit einem Satz von zugeordneten Netzelementen (EX1 bis EX8) zugeordnet ist, und mit mindestens einem Netzwerkmanagement-Client (NMC1, NMC2), der so ausgestaltet ist, daß er dem Betreiber mittels Zugriff auf einen oder auf mehrere Netzwerkmanagement-Server (NMS1 bis NMS3) die Überwachen und Verwalten des Kommunikationsnetzes ermöglicht, wobei der Netzwerkmanagement-Client (NMC1, NMC2) mit mindestens einer Client-Applikation (CA1 bis CA3) zur Durchführung einer Funktion zur Überwachung oder Kontrolle des Kommunikationsnetzes durch den Betreiber (OP1, OP2) versehen ist und die Netzwerkmanagement-Server (NMS1 bis NMS3) jeweils mit mindestens einer Server-Applikation (SA1 bis SA8) versehen sind, die Client-Applikationen (CA1 bis CA3) von Netzwerkmanagement-Clients die Ausführung von Netzwerkmanagement-Diensten in Bezug auf die Netzelemente ihres Netzwerkmanagementbereiches (NMA1 bis NMA3) anbieten, und der Netzwerkmanagement-Client (NMC1, NMC2) so ausgestaltet ist, daß er aus den der Client-Applikation (CA1, CA2) zuordenbaren Server-Applikationen dynamisch ein oder mehrere Server-Applikationen auswählt und eine Interaktion zwischen der Client-Applikation und der oder den ausgewählten Server-Applikationen initiiert,
**dadurch gekennzeichnet,**
**daß** der Netzwerkmanagement-Client (NMC1, NMC2) weiter so ausgestaltet ist, daß er für die Client-Applikation (CA1, CA2) zwei oder mehrere der Client-Applikation zuordenbare Server-Applikationen verschiedener Netzwerkmanagement-Server ermittelt, und daß er die für die Client-Applikation ermittelten Server-Applikationen kontaktiert, um zu ermitteln, unter welchen Bedingungen diese Server-Applikationen Dienste erbringen.

9. Netzwerkmanagementsystem (NMSYS) nach Anspruch 8, **dadurch gekennzeichnet, daß** das Netzwerkmanagementsystem (NMSYS) weiter so ausgestaltet ist, daß es mit einen für mehrere Netzwerkmanagement-Clients (NMC1, NMC2) zentralen Benennungs-Server (NS) versehen ist, der so ausgestaltet ist, daß er Netzwerkmanagement-Clients (NMC1, NMC2) Informationen über die im Kommunikationsnetznetz verfügbaren Server-Applikation (SA1 bis SA8) zur Verfügung stellt.

10. Verfahren zur Unterstützung der Verwaltung und Überwachung eines Kommunikationsnetzes durch einen Betreiber (OP1 bis OP2) des Kommunikationsnetzes, wobei bei dem Verfahren ein Netzwerkmanagement-Client (NMC1, NMC2) dem Betreiber mittels Zugriff auf einen oder auf mehrere Netzwerkmanagement-Server (NMS1 bis NMS3), denen jeweils ein Netzwerkmanagementbereich (NMA1 bis NMA3) mit einem Satz von zugeordneten Netzelementen (EX1 bis EX8) zugeordnet ist, die Überwachung und Verwaltung des Kommunikationsnetzes ermöglicht, und mindestens eine Client-Applikation (CA1 bis CA3) des Netzwerkmanagement-Client zur Durchführung einer Funktion zur Überwachung oder Kontrolle des Kommunikationsnetzes durch den Betreiber (OP1, OP2) auf eine Server-Applikation (SA1 bis SA8) eines der Netzwerkmanagement-Server zugreift, die Client-Applikationen von Netzwerkmanagement-Clients die Ausführung von Netzwerkmanagement-Diensten in Bezug auf die Netzelementes des Netzwerkmanagementbereiches anbietet, der ihrem Netzwerkmanagement-Server zugeordnet ist, und der Netzwerkmanagement-Client (NMC1, NMC2) aus den der Client-Applikation zuordenbaren Server-Applikationen dynamisch ein oder mehrere Server-Applikationen auswählt und eine Interaktion zwischen der Client-Applikation und der oder den ausgewählten Server-Applikationen initiiert,
**dadurch gekennzeichnet,**
**daß** der Netzwerkmanagement-Client (NMC1, NMC2) für die Client-Applikation (CA1, CA2) zwei oder mehrere der Client-Applikation zuordenbare Server-Applikationen verschiedener Netzwerkmanagement-Server ermittelt, und daß er die für die Client-Applikation ermittelten Server-Applikationen kontaktiert, um zu ermitteln, unter welchen Bedingungen diese Server-Applikationen Dienste erbringen.

## Claims

1. A network management client (NMC1, NMC2) for management and monitoring of a communication network by an operator (OP1, OP2), where the network management client (NMC1, NMC2) is developed in such a way that it enables the operator (OP1, OP2), by accessing one or more network management servers (NMS1 to NMS3), to each of which a network management area (NMA1 to NMA3) with a set of assigned network elements (EX1 to EX8) is assigned, to monitor and manage the communication network, and the network management client (NMC1, NMC2) is equipped with a least one client application (CA1 to CA3), which for the execution of a function for the monitoring or control of the communication network by the operator (OP1, OP2) accesses a server application (SA1 to SA8) of one of the network management servers, which offers client applications (CA1 to CA3) of network management clients the execution of network management services in relation to the network elements of the network management area (NMA1 to NMA3) which is assigned to its network management server (NMS1 to NMS3), and the network management client (NMC1, NMC2) is developed in such a way that it dynamically selects one or more server applications from the server applications assignable to the client application and initiates an interaction between the client application and the selected server application(s), **characterized in that** the network management client (NMC1, NMC2) is further developed in such a way that for the client application (CA1 to CA3) it determines two or more server applications of various network management servers that are assignable to the client application, and that it contacts the server applications found for the client application, in order to determine the conditions under which these server applications provide services.

2. Network management client (NMC1, NMC2) according to Claim 1, **characterized in that** the network management client (NMC1, NMC2) is further developed in such a way that to determine the two or more assignable server applications, it determines the server applications of the network management servers of a network management system which offer network management services usable by the client application (CA1, CA2).

3. Network management client (NMC1, NMC2) according to Claim 1, **characterized in that** the network management client (NMC1, NMC2) is further developed in such a way that to determine the two or more assignable server applications, it accesses a central server (NS) for several network management clients (NMC1, NMC2).

4. Network management client (NMC1, NMC2) according to Claim 3, **characterized in that** the network management client (NMC1, NMC2) is further developed in such a way that it downloads a list (SAL) from the central server, with the addresses of the server applications that have been found, and assigns it to the client application (CA1, CA2).

5. Network management client (NMC1, NMC2) according to Claim 1, **characterized in that** the network management client (NMC1, NMC2) is further developed in such a way that it contacts the server applications found for the client application (CA1, CA2) in order to determine which of these server applications provide which services and under what conditions.

6. Network management client (NMC1, NMC2) according to Claim 1, **characterized in that** the network management client (NMC1, NMC2) is further so developed that by contacting the found server applications it creates a profile of the server applications found for the client application (CA1, CA2), and uses this profile for dynamic selection of one or more server applications.

7. Network management client (NMC1, NMC2) according to Claim 1, **characterized in that** the network management client (NMC1, NMC2) is further developed in such a way that when contacting the found server applications it dynamically updates a profile of the server applications found for the client application.

8. A network management system (NMSYS) for management and monitoring of a communication network by one or more operators (OP1, OP2), with two or more network management servers (NMS1 to NMS3), to each of which a network management area (NMA1 to NMA3) with a set of assigned network elements (EX1 to EX8) is assigned, and with at least one network management client (NMC1, NMC2), which is developed in such a way that it enables the operator, by accessing one or more network management servers (NMS1 to NMS3), to monitor and manage the communication network, where the network management client (NMC1, NMC2) is equipped with a least one client application (CA1 to CA3), for the execution of a function for the monitoring or control of the communication network by the operator (OP1, OP2), and the network management servers (NMS1 to NMS3) are each equipped with at least one server application (SA1 to SA8), which offer client applications (CA1 to CA3) of network management clients the execution of network management services in relation to the network elements of its network management area (NMA1 to NMA3), and the network management client (NMC1, NMC2) is developed in such a way that it dynamically selects one or more server applications from the server applications assignable to the client application (CA1, CA2) and initiates an interaction between the client application and the selected server application(s),
**characterized in that** the network management client (NMC1, NMC2) is further developed in such a way that for the client application (CA1, CA2) it determines two or more server applications, of various network management servers, that are assignable to the client application, and that it contacts the server applications found for the client application, in order to determine the conditions under which these server applications provide services.

9. Network management system (NMSYS) according to Claim 8, **characterized in that** the network management system (NMSYS) is further developed in such a way that it is equipped with a central name server (NS) for several network management clients (NMC1, NMC2), this name server being developed to supply network management clients (NMC1, NMC2) with information about the available server applications (SA1 to SA8) in the communication network.

10. Method to support the management and monitoring of a communication network by an operator (OP1 to OP2) of the communication network, where in the method a network management client (NMC1, NMC2) enables the operator, by accessing one or more network management servers (NMS1 to NMS3), to each of which a network management area (NMA1 to NMA3) with a set of assigned network elements (EX1 to EX8) is assigned, to monitor and manage the communication network, and at least one client application (CA1 to CA3) of the network management client, for the execution of a function for the monitoring or control of the communication network by the operator (OP1, OP2), accesses a server application (SA1 to SA8) of one of the network management servers, which offers client applications of network management clients the execution of network management services in relation to the network elements of the network management area which is assigned to its network management server, and the network management client (NMC1, NMC2) dynamically selects one or more server applications from the server applications assignable to the client application and initiates an interaction between the client application and the selected server application(s),
**characterized in that** the network management client (NMC1, NMC2), for the client application (CA1, CA2), determines two or more server applications of various network management servers that are assignable to the client application, and that it contacts the server applications found for the client application, in order to determine the conditions under which these server applications provide services.

## Revendications

1. Client de gestion de réseau (NMC1, NMC2) pour la gestion et la surveillance d'un réseau de communication par un exploitant (OP1, OP2), le client de gestion de réseau (NMC1, NMC2) étant conçu de telle sorte qu'il permet à l'exploitant (OP1, OP2) de surveiller et de gérer le réseau de communication au moyen d'un accès à un ou plusieurs serveurs de gestion de réseau (NMS1 à NMS3), auxquels est attribué respectivement un secteur de gestion de réseau (NMA1 à NMA3) avec un ensemble d'éléments de réseau attribués (EX1 à EX8), et le client de gestion de réseau (NMC1, NMC2) est pourvu d'au moins une application de client (CA1 à CA3) qui a recours à une application de serveur (SA1 à SA8) de l'un des serveurs de gestion de réseau pour l'application d'une fonction pour la surveillance ou le contrôle du réseau de communication par l'exploitant (OP1, OP2), les applications de client (CA1 à CA3) de clients de gestion de réseau proposent l'exécution de services de gestion de réseau en ce qui concerne les éléments de réseau du secteur de gestion de réseau (NMA1 à NMA3) qui est attribué à leur serveur de gestion de réseau (NMS1 à NMS3), et le client de gestion de réseau (NMC1, NMC2) est conçu de telle sorte qu'il choisit de façon dynamique une ou plusieurs applications de serveur parmi les applications de serveur pouvant être attribuées à l'application de client et amorce une interaction entre l'application de client et la ou les applications de serveur choisies,
**caractérisé en ce que** le client de gestion de réseau (NMC1, NMC2) est conçu également de telle sorte qu'il détermine pour l'application de client (CA1 à CA2) deux ou plus de deux applications de serveur de différents serveurs de gestion de réseau qui peuvent être attribuées à l'application de client et de telle sorte qu'il contacte les applications de serveur déterminées pour l'application de client pour déterminer dans quelles conditions ces applications de serveur fournissent des services.

2. Client de gestion de réseau (NMC1, NMC2) selon la revendication 1, **caractérisé en ce que** le client de gestion de réseau (NMC1, NMC2) est conçu également de telle sorte que, pour la détermination des deux ou plus de deux applications de serveur pouvant être attribuées, il détermine les applications de serveur des serveurs de gestion de réseau d'un système de gestion de réseau qui offrent des services de gestion de réseau pouvant être utilisés pour l'application de client (CA1, CA2).

3. Client de gestion de réseau (NMC1, NMC2) selon la revendication 1, **caractérisé en ce que** le client de gestion de réseau (NMC1, NMC2) est conçu également de telle sorte que, pour la détermination des deux ou plus de deux applications de serveur pouvant être attribuées, il a recours à un serveur (NS) central pour plusieurs clients de gestion de réseau (NMC1, NMC2).

4. Client de gestion de réseau (NMC1, NMC2) selon la revendication 3, **caractérisé en ce que** le client de gestion de réseau (NMC1, NMC2) est conçu également de telle sorte qu'il télécharge à partir du serveur central une liste (SAL) avec les adresses des applications de serveur déterminées et l'attribue à l'application de client (CA1, CA2).

5. Client de gestion de réseau (NMC1, NMC2) selon la revendication 1, **caractérisé en ce que** le client de gestion de réseau (NMC1, NMC2) est conçu également de telle sorte qu'il contacte les applications de serveur déterminées pour l'application de client (CA1, CA2) pour déterminer laquelle de ces applications de serveur fournit quels services et dans quelles conditions.

6. Client de gestion de réseau (NMC1, NMC2) selon la revendication 1, **caractérisé en ce que** le client de gestion de réseau (NMC1, NMC2) est conçu également de telle sorte qu'il établit au moyen du contact des applications de serveur déterminées un profil des applications de serveur déterminées pour l'application de client (CA1, CA2) et utilise ce profil pour le choix dynamique de une ou plusieurs applications de serveur.

7. Client de gestion de réseau (NMC1, NMC2) selon la revendication 1, **caractérisé en ce que** le client de gestion de réseau (NMC1, NMC2) est conçu également de telle sorte qu'il met à jour de façon dynamique un profil des applications de serveur déterminées pour l'application de client lors du contact des applications de serveur déterminées.

8. Système de gestion de réseau (NMSYS) pour la gestion et la surveillance d'un réseau de communication par un ou plusieurs exploitants (OP1, OP2), avec deux ou plus de deux serveurs de gestion de réseau (NMS1 à NMS3), à chacun desquels est attribué un secteur de gestion de réseau (NMA1 à NMA3) avec un ensemble d'éléments de réseau attribués (EX1 à EX8), et avec au moins un client de gestion de réseau (NMC1, NMC2) qui est conçu de telle sorte qu'il permet à l'exploitant de surveiller et de gérer le réseau de communication par accès à un ou à plusieurs serveurs de gestion de réseau (NMS1 à NMS3), le client de gestion de réseau (NMC1, NMC2) étant pourvu d'au moins une application de client (CA1 à CA3) pour l'exécution d'une fonction pour la surveillance ou le contrôle du réseau de communication par l'exploitant (OP1, OP2) et le serveur de gestion de réseau (NMS1 à NMS3) étant pourvu chacun d'au moins une application de serveur (SA1 à SA8), les applications de client (CA1 à CA3) de clients de gestion de réseau proposant l'exécution de services de gestion de réseau en ce qui concerne les éléments de réseau de leur secteur de gestion de réseau (NMA1 à NMA3) et le client de gestion de réseau (NMC1, NMC2) étant conçu de telle sorte qu'il choisit de façon dynamique une ou plusieurs applications de serveur parmi les applications de serveur pouvant être attribuées à l'application de client (CA1, CA2) et amorce une interaction entre l'application de client et la ou les applications de serveur choisies,
**caractérisé en ce que** le client de gestion de réseau (NMC1, NMC2) est conçu également de telle sorte qu'il détermine pour l'application de client (CA1, CA2) deux ou plusieurs des applications de serveur, pouvant être attribuées à l'application de client, de différents serveurs de gestion de réseau et de telle sorte qu'il contacte les applications de serveur déterminées pour l'application de client pour déterminer dans quelles conditions ces applications de serveur fournissent des services.

9. Système de gestion de réseau (NMSYS) selon la revendication 8, **caractérisé en ce que** le système de gestion de réseau (NMSYS) est conçu également de telle sorte qu'il est pourvu d'un serveur de désignation (NS) central pour plusieurs clients de gestion de réseau (NMC1, NMC2) qui est conçu de telle sorte qu'il met à la disposition des clients de gestion de réseau (NMC1, NMC2) des informations sur l'application de serveur (SA1 à SA8) disponible dans le réseau de communication.

10. Procédé pour l'assistance de la gestion et de la surveillance d'un réseau de communication par un exploitant (OP1 à OP2) du réseau de communication, un client de gestion de réseau (NMC1, NMC2) permettant à l'aide du procédé à l'exploitant de surveiller et de gérer le réseau de communication au moyen d'un accès à un ou à plusieurs serveurs de gestion de réseau (NMS1 à NMS3), à chacun desquels est attribué un secteur de gestion de réseau (NMA1 à NMA3) avec un ensemble d'éléments de réseau attribués (EX1 à EX8), et au moins une application de client (CA1 à CA3) du client de gestion de réseau a accès à une application de serveur (SA1 à SA8) de l'un des serveurs de gestion de réseau pour l'exécution d'une fonction pour la surveillance ou le contrôle du réseau de communication par l'exploitant (OP1, OP2), les applications de clients de gestion de réseau offrant l'exécution de services de gestion de réseau en ce qui concerne les éléments de réseau du secteur de gestion de réseau qui est attribué à leur serveur de gestion de réseau, et le client de gestion de réseau (NMC1, NMC2) choisissant de façon dynamique une ou plusieurs applications de serveur parmi les applications de serveur pouvant être attribuées à l'application de client et amorçant une interaction entre l'application de client et la ou les applications de serveur choisies,
**caractérisé en ce que** le client de gestion de réseau (NMC1, NMC2) détermine pour l'application de client (CA1, CA2) deux ou plusieurs applications de serveur, pouvant être attribuées à l'application de client, de différents serveurs de gestion de réseau et **en ce qu'**il contacte les applications de serveur déterminées pour l'application de client pour déterminer dans quelles conditions ces applications de serveur fournissent des services.
